# EUROPEAN PATENT SPECIFICATION

(11) **EP 2 026 551 B1**
(45) Date of publication and mention of the grant of the patent: **24.11.2010**
(21) Application number: 08715236.9
(22) Date of filing: 14.03.2008
(51) Int. Cl.: H04M 15/00, H04L 12/14

(54) **A METHOD AND SYSTEM OF CHARGING AND AN ACCOUNT PERIOD SWITCHING MODULE**
VERFAHREN UND ANORDNUNG ZUR VERGEBÜHRUNG UND EINHEIT ZUM SCHALTEN EINES ZEITABSCHNITTS EINER INTERNET ZUGANGSPERIODE
PROCÉDÉ ET SYSTÈME DE CHARGEMENT ET MODULE DE COMMUTATION DE PÉRIODE D'ACCÈS INTERNET

(30) Priority: 15.03.2007 CN 200710088219
(43) Date of publication of application: 18.02.2009
(73) Proprietor: Huawei Technologies Co., Ltd., Longgang District, Shenzhen Guangdong 518129 (CN)
(72) Inventor: WANG, Bin, Shenzhen Guangdong 518129 (CN); XU, Zhixian, Shenzhen Guangdong 518129 (CN); ZHANG, Xiaoli, Shenzhen Guangdong 518129 (CN); XIE, Qiuhua, Shenzhen Guangdong 518129 (CN); CHEN, Tingrong, Shenzhen Guangdong 518129 (CN)
(74) Representative: Gulde Hengelhaupt Ziebig & Schneider
(86) International application number: PCT/CN2008/070500
(87) International publication number: WO 2008/110123

(56) References cited:
- CN-A- 1 484 430
- CN-A- 1 852 383
- CN-A- 1 859 136
- CN-A- 101 022 488

## Description

### Field of the Invention

This invention relates to the technical field of billing, and in particular to a billing method and system, and a bill cycle cut off module.

### Background of the Invention

A billing system is an important part in the telecommunication operation field, and it works to form the entire telecommunication operation together with service provision and service ensurance.

In a traditional offline billing system, a network element, such as a switch, a Mobile Switch Center (MSC), a Gateway GPRS Support Node (GGSN) and the like, logs information of network resource usage or service usage, creates Call Detail Recording (CDR) that is temporarily stored in the network element in the form of a CDR file. The billing system collects (for example, in FTP protocol) the CDR file from the network element periodically, extracts relevant information of service usage and network resource usage from the CDR file, and takes the information as a basis for billing to support the subsequent billing procedures. Hereinafter, the implementation procedures of traditional offline billing are described in detail.

The network element creates a CDR file from the information on service used by a terminal. Specifically, the billing information is usually logged by item in the CDR file; a collecting system in the billing system extracts the CDR file from the network element, carries out preprocessing operations, such as duplicate checking, error correcting, bill combining, preprocessed information to a rating and billing module for rating.

After receiving the pre-processed CDR billing information, for each item of billing information in the CDR file, the rating and billing module extracts service information in the billing information, and searches for the preset price information of the service according to the service information. For example, the price for local call service may be: 0.1RMB per minute for first 3 minutes, and 0.05RMB per minute after the first 3 minutes, etc. The rating and billing module calculates service usage fee for a user according to the obtained price information and a service usage amount in the rating information. For example, start and termination time of a call is from 8:56:11 to 9:00:28 in a day, or the call duration is 5 minutes. Then, the subsequent billing module charges the service usage fee to an account related to the terminal according to a payment relationship of the user.

In order to facilitate account management, a concept of "bill cycle" is introduced, i.e., for an account, continuous time is split artificially into time periods, and each time period is referred to as a bill cycle. In account management, charge data of an account is accumulated and collected by different bill cycles, so as to support charging the user by bill cycle subsequently. At present, a calendar month is usually taken as a bill cycle. For example, an operator usually takes 0:00 a.m. of the first day of each calendar month as bill cycle cut off time, and therefore, the duration before the 0:00 a.m. of the first day of each month and after the 0:00 a.m. of the first day of the previous month is taken as a bill cycle. In a bill cycle, the billing information is accumulated and collected. After a bill cycle cut off, a new bill cycle starts, and the charge data of the previous bill cycle is calculated to be a basis for providing a bill to the user; and the user pays the bill after confirming the bill.

A series of operations for accumulating account data of the previous bill cycle according to the bill cycle cut off point and initializing a new bill cycle are referred to as a bill cycle cut off. During the bill cycle cut off process, the charge data of the previous bill cycle before the bill cycle cut off point must be accumulated and collected, and the final charge data must be stored in a different location for the use of subsequent functions, such as making a bill.

For the reason that a traditional billing system carries out billing through a CDR call ticket in an offline way, it may cause a call ticket delay in some abnormal cases, i.e., a call ticket file or a call ticket record pertaining to the previous bill cycle is collected to the billing system for rating only after a bill cycle cut off. The charge data after rating should be the charge data generated in the previous bill cycle. Therefore, if the charge data is to be billed into the previous bill cycle, it has an adverse effect on the billing process. In a specific system implementation process, according to the service requirement of the operator, for the above call ticket delay condition, the billing function in some systems may determine whether to bill the charge data into the previous bill cycle or the current bill cycle according to the generation time of the charge, i.e., the billing function supports both billing into the previous bill cycle and billing into the current bill cycle. However, in other systems, the billing function bills all charge data after a bill cycle cut off into the current bill cycle.

The implementation mechanism of the bill cycle cut off in the existing system is to run a bill cycle cut off detector in the background. When having detected that the time for the bill cycle cut off is reached, the bill cycle cut off detector triggers a bill cycle cut off process to execute the bill cycle cut off operation in batch for all users. In an actual operation, in order to avoid adverse effects on a production system, the bill cycle cut off operation is usually performed only when the network is in an idle state (for example, at midnight). In addition, during the bill cycle cut off process, in order to prevent collision resulting from concurrent billing data manipulation by the rating and billing module and the bill cycle cut off module, the billing function typically has to be deactivated during the bill cycle cut off process, and such time period is referred to as an "account locking period". During the process in which the billing function is deactivated, the account data may not be updated in time, and it is unable to carry out credit control for the users. Therefore, such process may cause loss to the operator.

As we all know, offline billing is not real-time, and it is typically applied to charge post-paid users. Although offline billing may support diverse services, it is unable to provide credit control for the users, and therefore may lead to a risk of loss due to malicious overdrawing.

Intelligent Network based billing is implemented in a real-time billing mechanism: when a user requests a service, a Service Switching Point (SSP) reports the service information requested by the user and the user information to a Service Control Point (SCP). According to the reported information and the user's account information, the SCP determines whether the balance in the user's account is enough, so as to decide whether the user may keep enjoying the service and control the SSP to decide whether to switch the service for the user. During the process in which the user uses the service, the SCP collects the service usage information reported from the SSP continuously, deducts usage fee from the user's account in real time, and controls the SSP to terminate the service for the user when the balance in the user's account is not enough. Real-time billing may effectively control malicious overdrawing and avoid arrears, and is applied to charge prepaid users presently. However, the Intelligent Network based online billing method employs simple prices. In addition, because it employs real-time charge deduction instead of billing by bill cycle, it is usually unable to provide a bill for a user, but only to provide a detailed list of service usage, and therefore may not meet the requirement of users.

During the process in which this invention is implemented, the inventors found that: online billing and offline billing are usually used for prepaid users and post-paid users respectively, and the online billing system and the offline billing system are separate from each other and therefore cause dispersed user data and increased operation cost. In addition, due to different provided services caused by different billing patterns, it is difficult to implement cross preferential treatment among different services. It is urgent for the billing system to incorporate the prepaid and the post-paid.

It can be seen that the existing billing method does not support a real-time online bill cycle cut off, and the bill cycle cut off requires a long time and has poor flexibility. In addition, because the existing bill cycle cut off is processed in batch in offline mode and usually is performed when the network is in an idle state (for example, at midnight), it is difficult to support individualized bill cycle customization for different users. Before the bill cycle cut off is completed, it is difficult to accurately collect and accumulate the charge in the bill cycle. When a user makes account cancellation, it is difficult to perform accurate statistic tasks on the charge in the current bill cycle, and therefore loss may occur for the operator. During the account cancellation process, the user has to wait for a long time till the current bill cycle terminates, and therefore customer satisfaction is degraded.

CN 1852383 A discloses a charging method and system for receiving user's charging event, and determining at least two specified charging modes to the user; calculating relevant fee of this charging event according to each specified charging mode respectively; carrying out process for relevant fee to enter an account according to each specified charging mode respectively, and creating account bill; periodic accumulating all bills in each specified charging mode in a charging off period respectively.

### Summary of the Invention

A billing method and system, and a bill cycle cut off module are provided in embodiments of this invention, so as to implement real-time online bill cycle cut off and avoid loss resulted from out-of-time bill cycle cut off.

The technical solutions provided in the embodiments of this invention include the following:

A billing method includes:
receiving an online billing message and carrying out preprocessing for the message, wherein the online billing message includes user identification information and billing information; and
executing an online bill cycle cut off operation after determining that the bill cycle cut off operation is required to be triggered for an account related to the user identification information, obtaining a result of the bill cycle cut off, and carrying out a rating and billing operation according to the billing information so as to complete billing.

A billing system includes:
a billing information collecting and preprocessing module, adapted to receive an online billing message and carry out preprocessing for the message, wherein the online billing message includes user identification information and billing information;
a main control module, adapted to transmit a preprocessed online billing message, receive feedback information, and invoke a rating and billing module to carry out billing upon determining that the feedback information includes a result of a bill cycle cut off, receive a result of a rating and billing operation, and return a response for the billing message to an initiator of the online billing message via the billing information collecting and preprocessing module;
a bill cycle cut off module, adapted to execute an online bill cycle cut off operation after determining that the bill cycle cut off operation is required to be triggered for an account related to the user identification information, and return the result of the bill cycle cut off to the main control module; and
a rating and billing module, adapted to carry out the rating and billing operation according to the billing information.

A bill cycle cut off module includes:
a cut off determining unit, adapted to receive from a main control module an online billing message including user identification information, and determine whether a bill cycle cut off operation is required to be triggered for an account related to the user identification information;
a bill cycle cut off unit, adapted to execute an online bill cycle cut off operation according to a notification from the cut off determining unit and obtain a result of the bill cycle cut off; and
a result return unit, adapted to transmit to the main control module the result of the bill cycle cut off received from the bill cycle cut off unit.

The embodiments of this invention can implement a real-time online bill cycle cut off and avoid loss resulted from out-of-time bill cycle cut off. The embodiments of this invention can incorporate online billing and offline billing, can be implemented flexibly, and can easily realize individualized bill cycle setting. During the account cancellation process of the user, this invention can shorten the waiting time of the user and improve customer satisfaction.

### Brief Description of the Drawings

Figure 1 is a schematic diagram of a flow for implementing the billing method according to an embodiment of this invention;

Figure 2 is a schematic diagram of a processing flow of the bill cycle cut off module according to an embodiment of this invention;

Figure 3 is a schematic diagram of a billing process for a complete call process according to an embodiment of this invention;

Figure 4 is a schematic diagram of a flow of an operation for triggering a bill cycle cut off in a batch processing mode;

Figure 5 is a structural diagram of the bill cycle cut off module according to an embodiment of this invention.

### Detailed Description of the Embodiments

Hereinafter, this invention is further described in detail, with reference to the accompanying drawings and the embodiments.

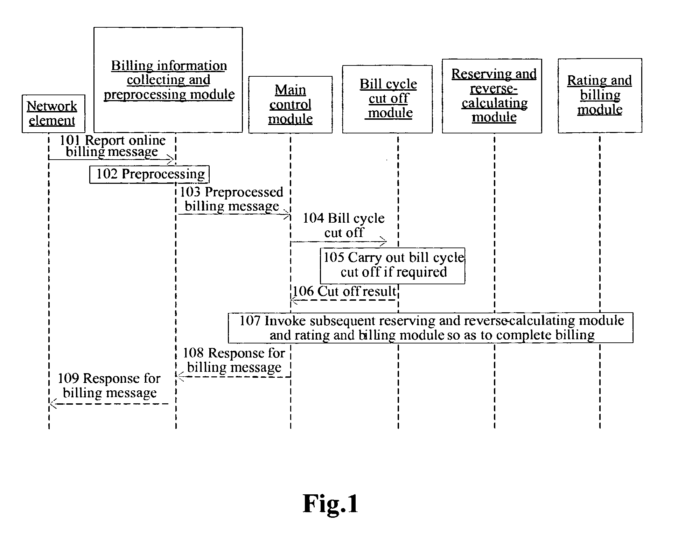

Figure 1 is a schematic diagram of a flow for implementing the billing method according to the embodiment of this invention. The billing method includes the following steps.

Step 101, a network element reports to the billing system an online billing message including user identification information and billing information. Specifically, the network element may be an SCP, a GGSN, an MSC, etc.

Steps 102 to 103, a billing information collecting and preprocessing module in the billing system receives the online billing message, carries out preprocessing for the message, and then sends the preprocessed online billing message to a main control module in the billing system.

Specifically, the billing information collecting and preprocessing module is mainly responsible for collecting billing information from the network element in a specific protocol and carrying out preprocessing for the billing information, and then the preprocessed billing information is converted into a uniform format for the use of subsequent billing procedures. The collected billing information includes, but is not limited to: a billing message, a CDR or an IP Detail Record (IPDR) file. The preprocessing includes operations such as coding/decoding, formatting and duplicate checking for the billing information and the like. The module and the processing procedures thereof are described in the existing solution, and the description thereof is omitted here.

Steps 104 to 106, the main control module invokes a bill cycle cut off module via a bill cycle cut off interface, i.e., it sends a bill cycle cut off message including user identification information to the bill cycle cut off module. The bill cycle cut off module determines whether a bill cycle cut off operation is required to be triggered for an account related to the user identification information. If a bill cycle cut off operation is required to be triggered, the bill cycle cut off module executes the online bill cycle cut off operation, and transmits a result of the bill cycle cut off to the main control module; otherwise, it directly returns to the main control module information for indicating that no bill cycle cut off is required.

In the embodiment, it is assumed that the bill cycle cut off is required and the result of the bill cycle cut off is returned.

Step 107, the main control module obtains the result of the bill cycle cut off, and invokes a reserving and reverse-calculating module and/or a rating and billing module to carry out a reserving and reverse-calculating operation and/or a rating and billing operation according to the billing information so as to complete billing.

The rating and billing module is adapted to calculate fee to be paid due to service usage by the user according to the price information and the service usage amount extracted from the billing information, and update the account information for the user, such as the balance in the account, detailed service records related to the fee and the like.

The reserving and reverse-calculating module is adapted to carry out reverse-calculating according to the account information and service information of the user, and carry out a reserving operation for the user using the service. Reverse calculating refers to calculate the amount of the service available to the user according to the current balance in the account and the price information of using the service, such as available call duration remained, available bytes of traffic information for downloading. In addition, the reserving and reverse-calculating module may notify the user of the result of the reverse-calculated service amount, or use the result in the subsequent billing procedures (for example, reserving). Reserving is a credit control mechanism for online billing, and is used to avoid unnecessary loss of the operator, i.e., for a service used by a user, a certain amount of money is pre-deducted in advance from the balance of the user's account. After the user has used the service, the remaining pre-deducted amount of money is reimbursed.

The further description for the step is omitted, for the reason that reference may be made to the implementation in the prior art.

Steps 108 to 109, the main control module returns a response for the billing message to the network element via the billing information collecting and preprocessing module.

Thus, a billing method incorporating online billing and offline billing is implemented.

The aforementioned online billing message may be a session-based message or an event-based message. For the session-based message, a billing initiation message, a billing update message, and a billing termination message may be included in a session. Of course, the billing update message may not be included. For example, after the user starts the call and the network element reports the billing initiation message, the billing system may reserve 5 minutes. If the user terminates the call within 5 minutes, the network element reports a billing termination message directly, and thus there is no billing update message. If the call lasts for 23 minutes, a plurality of billing update messages are produced. It can be understood that for a call process, a billing initiation message, a billing termination message, and none or at least one billing update message may be included. For the event-based message, only an event message occurs for an event; no reverse-calculating or reserving is required; fee is deducted directly after rating and billing is carried out; and thus the reserving and reverse-calculating operation is not required.

The protocol used to bear the online billing message may be the Diameter and the Radius and the like, i.e. the network element may communicate with the billing system in a protocol such as the Diameter or the Radius and the like. In addition, the network element may report the CDR or IPDR file to the billing system through a specific file or stream transfer protocol. The specific file or stream transfer protocol includes, but is not limited to: the File Transfer Protocol (FTP), the File Transfer Access and Management (FTAM) protocol, the IP Detail Record/Stream Processor (IPDR/SP) protocol, etc.

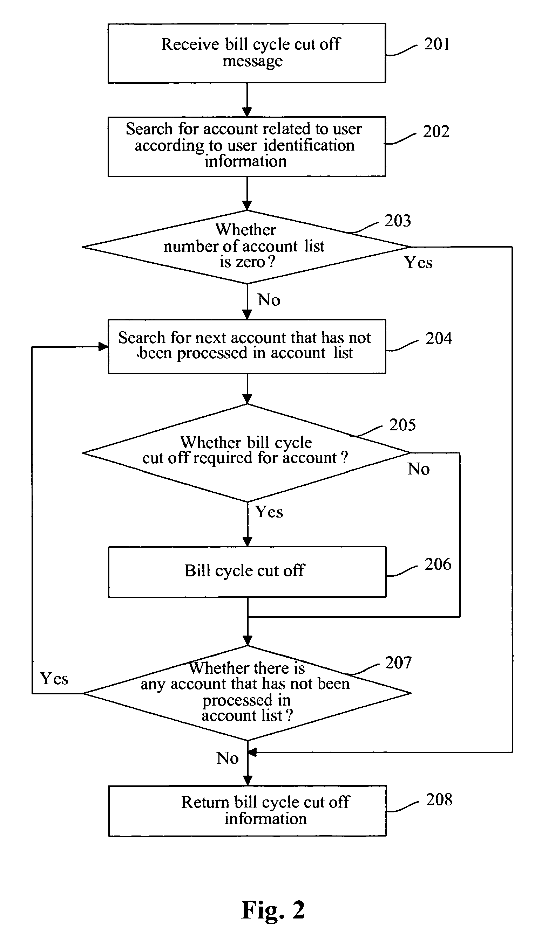

The processing procedures for determining whether a bill cycle cut off operation is required to be triggered for the account related to the user identification information and performing a bill cycle cut off as described in Steps 104 to 106 in Figure 1 are shown in Figure 2. Figure 2 is a schematic diagram of a processing flow of the bill cycle cut off module according to the embodiment of this invention.

Steps 201 to 202, after the bill cycle cut off module receives the bill cycle cut off message, it extracts the user identification information from the message, searches for an account (which is also referred to as a payment relationship in the prior art) related to the user identification information, and obtains an account list related to the user identification information.

Step 203, the module determines whether the number of the list is zero. If the number of the list is zero, it executes Step 208; otherwise it executes Step 204.

Step 204, the module searches for the next account that has not been processed in the account list.

Step 205, the module determines whether a bill cycle cut off is required for the account according to a preset rule. If a bill cycle cut off is required, it executes Step 206; otherwise it executes Step 207.

The aforementioned preset rule may be: the current occurrence time of the billing message is later than the termination time of the current bill cycle for the current account.

Step 206, the module executes the online bill cycle cut off in either of the following two ways:

In the first way, if a storing space exists and the charge data of the current bill cycle and the charge data of the previous bill cycle are stored at different storage positions, the process for executing the online bill cycle cut off process includes: storing the charge data of the current bill cycle to a storage position where the charge data of the previous bill cycle is stored, clearing the charge data of the current bill cycle except the balance of the current bill cycle, inheriting the balance data in the storage position as the balance data of a current bill cycle, and then changing start and termination time of the current bill cycle to those time having passed through the bill cycle cut off for the account.

In the second way: if two storing spaces for storing the charge data of the current bill cycle and the charge data of the previous bill cycle respectively exist, and an identifier or a pointer of the current bill cycle and an identifier or a pointer of the previous bill cycle for identifying or pointing to the charge data of the two bill cycles respectively exist, a process for executing the online bill cycle cut off process includes: exchanging the identifier or the pointer of the current bill cycle with the identifier or the pointer of the previous bill cycle, clearing the charge data of a bill cycle identified by the exchanged identifier of the current bill cycle or pointed to by the exchanged pointer of the current bill cycle except the balance of the bill cycle, inheriting the balance data of the bill cycle as the balance data of a current bill cycle, and then changing start and termination time of the current bill cycle to those time having passed through the bill cycle cut off for the account.

Step 207, the module determines whether there is any account that has not been processed in the account list. If there is an account that has not been processed in the account list, it returns to Step 204; otherwise it executes Step 208.

Step 208, the module returns bill cycle cut off information.

Here, if the bill cycle cut off operation is executed, the result of the bill cycle cut off is returned; if no bill cycle cut off operation is executed, information for indicating that no bill cycle cut off is required is returned.

It is obvious that each account in the account list should be determined in sequence according to the preset rule, if the number of accounts in the account list is not zero.

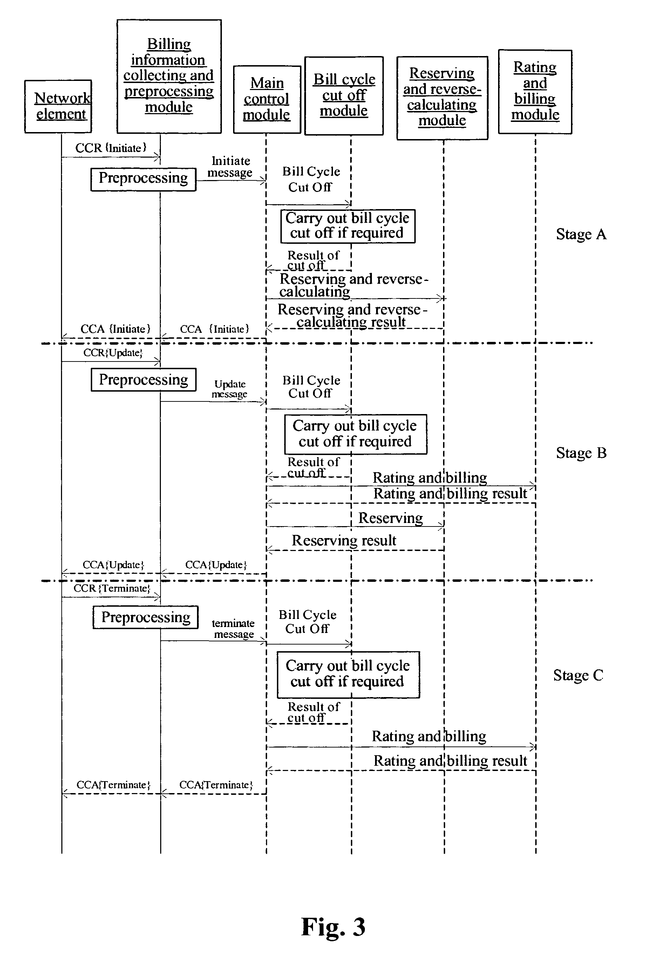

Figure 3 is a schematic diagram of the billing process for a complete call process according to the embodiment of this invention. The embodiment is based on the Diameter protocol.

Here, a complete call process may be divided into three stages: the time before the user actually starts the call is referred to as a "before service" stage, the time in the call process is referred to as a "in service" stage, and the time when the user terminates the call or when the network element terminates the call due to insufficient balance is referred to as a "service terminated" stage. These stages are described as follows.

In the "before service" stage, i.e., in stage A as shown in Figure 3, the network element reports a Diameter CCR Initiate message (an online billing initialization message) to the billing system. When receiving the Diameter CCR Initiate message, the billing system carries out preprocessing for the message, and then transmits the preprocessed message to the main control module in the billing system. The main control module sends a bill cycle cut off message including user identification information to the bill cycle cut off module.

The bill cycle cut off module detects whether a bill cycle cut off operation is required to be triggered for the account related to the user identification information according to the user identification information; if a bill cycle cut off is required, it carries out bill cycle cut off processing, and returns the result of the bill cycle cut off to the main control module after the bill cycle cut off is completed; if no bill cycle cut off is required, it returns to the main control module information for indicating that no bill cycle cut off is required. In the embodiment, it is assumed that information of the result of the bill cycle cut off is returned.

With reference to the result of the bill cycle cut off, the main control module controls and invokes the reserving and reverse-calculating module to carry out reserving and reverse calculating for the user using the service, and finally accomplishes the processing process of the Diameter CCR Initiate message.

In the "in service" stage, i.e., the stage B as shown in Figure 3, the network element reports a Diameter CCR Update message (an online billing update message) periodically. After receiving the Diameter CCR Update message, the billing system carries out preprocessing for the message, and transmits the preprocessed billing message to the main control module in the billing system. The main control module sends a bill cycle cut off message including user identification information to the bill cycle cut off module.

The bill cycle cut off module detects whether a bill cycle cut off operation is required to be triggered for the account related to the user identification information according to the user identification information; if a bill cycle cut off is required, it carries out bill cycle cut off processing, and returns the result of the bill cycle to the main control module after the bill cycle cut off is completed; if no bill cycle cut off is required, it returns to the main control module information for indicating that no bill cycle cut off is required. In the embodiment, it is assumed that information of the result of the bill cycle cut off is returned.

After receiving the message from the bill cycle cut off module, the main control module controls the subsequent rating and billing module to carry out the rating and billing operation for the service amount used by the user with reference to the information of the result of the bill cycle cut off, and invokes the reserving and reverse-calculating module to carry out the reserving operation for the user using the service, and finally accomplishes the processing process of the Diameter CCR Update message.

In the embodiment, the online billing update message occurs only once. If required, the online billing update message may be produced a plurality of times, or no online billing update message is produced.

In "service terminated" stage, i.e., the stage C as shown in Figure 3, the network element reports a Diameter CCR Terminate message (an online termination message) to the billing system. After receiving the Diameter CCR Terminate message, the billing system carries out preprocessing for the message, and then sends the preprocessed Diameter CCR Terminate message to the main control module. The main control module sends a bill cycle cut off message including user identification information to the bill cycle cut off module.

The bill cycle cut off module detects whether a bill cycle cut off operation is required to be triggered for the account related to the user identification information according to the user identification information; if a bill cycle cut off is required, it carries out the bill cycle cut off processing, and returns the result of the bill cycle cut off to the main control module after the bill cycle cut off is completed; if no bill cycle cut off is required, it returns to the main control module information for indicating that no bill cycle cut off is required. In the embodiment, it is assumed that information of the result of the bill cycle cut off is returned.

It is noted that the reason for determining whether a bill cycle cut off is required to be triggered is: for example, if the termination time of the bill cycle of the user is March 1, 2007 and the user starts a call at 23:57 on February 28 and terminates the call at 00:02 on March 1, a bill cycle cut off is required because a part of the call time goes beyond the termination time of the bill cycle.

After receiving the message from the bill cycle cut off module, the main control module controls the subsequent rating and billing module to carry out the rating and billing operation for the service amount used by the user with reference to the information of the result of the bill cycle cut off so as to complete the billing process for the user.

Thus, the billing for a complete call process is implemented.

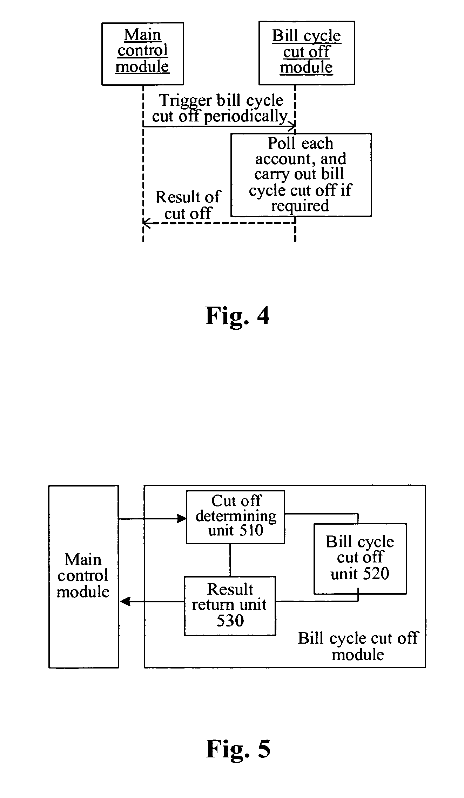

In addition, another billing approach can be used. As shown in Figure 4, the main control module periodically sends to the bill cycle cut off module information for detecting bill cycle, and the bill cycle cut off module polls each account. If an account that meets the bill cycle cut off criterion exists, it carries out the bill cycle cut off operation, the reserving and reverse-calculating operation, and the rating and billing operation so as to complete billing. The bill cycle cut off criterion may include: reaching or exceeding the termination time of the bill cycle. Of course, the reserving and reverse-calculating operation may not exist. In such process, the bill cycle cut off operation is triggered in a real-time batch processing mode of the prior art, and therefore is described in short here.

This invention further provides a billing system, which includes a billing information collecting and preprocessing module, a main control module, a rating and billing module, and a bill cycle cut off module:
the billing information collecting and preprocessing module is adapted to receive an online billing message and carry out preprocessing for the message, wherein the online billing message includes user identification information and billing information;
the main control module is adapted to transmit a preprocessed online billing message, receive feedback information, and invoke a rating and billing module to carry out billing upon determining that the feedback information includes a result of a bill cycle cut off, receive a result of a rating and billing operation, and return a response for the billing message to an initiator of the online billing message via the billing information collecting and preprocessing module; and
the bill cycle cut off module is adapted to execute an online bill cycle cut off operation after determining that the bill cycle cut off operation is required to be triggered for an account related to the user identification information, and return the result of the bill cycle cut off to the main control module; and
the rating and billing module is adapted to carry out the rating and billing operation according to the billing information.

The aforementioned online billing message may include a session-based message or an event-based message. If the online billing message includes a session-based message, the online billing system may further include: a reserving and reverse-calculating module adapted to accept invocation of the main control module, carry out a reserving and reverse-calculating operation according to the billing information, and return the reserving and reverse-calculating operation to the main control module.

The aforementioned bill cycle cut off module is further adapted to directly return to the main control module information for indicating that no bill cycle cut off is required after determining that no bill cycle cut off operation is required to be triggered for the account related to the user identification information.

The aforementioned main control module is further adapted to periodically send information for detecting a bill cycle; the bill cycle cut off module is further adapted to poll each account, and execute the bill cycle cut off operation if an account that meets a bill cycle cut off criterion exists; and the bill cycle cut off criterion includes reaching or exceeding the termination time of the bill cycle.

This invention further provides a bill cycle cut off module, which includes:
a cut off determining unit 510, adapted to receive from a main control module an online billing message including user identification information, and notify a bill cycle cut off unit 520 after determining that a bill cycle cut off operation is required to be triggered for the account related to the user identification information;
the bill cycle cut off unit 520, adapted to execute an online bill cycle cut off operation according to the received notification, obtain a result of the bill cycle cut off, and transmit the result to a result return unit 530; and
the result return unit 530, adapted to transmit to the main control module the result of the bill cycle cut off.

The aforementioned cut off determining unit 510 is further adapted to notify the result return unit 530 after determining that no bill cycle cut off operation is required to be triggered for the account related to the user identification information.

The aforementioned result return unit 530 is further adapted to transmit to the main control module information for indicating that no bill cycle cut off is required.

The aforementioned cut off determining unit 510 is further adapted to receive information for periodically detecting a bill cycle, poll each account, and notify the bill cycle cut off unit 520 to execute the bill cycle cut off operation if an account that meets a bill cycle cut off criterion exists. The bill cycle cut off criterion may include: reaching or exceeding the termination time of the bill cycle.

The embodiments of this invention can implement a real-time online bill cycle cut off and avoid loss resulted from out-of-time bill cycle cut off. The embodiments of this invention can incorporate online billing and offline billing, can be implemented flexibly, and can easily realize individualized bill cycle setting. During the account cancellation process for the user, this invention can shorten the waiting time of the user and improve customer satisfaction.

This invention is disclosed by, but not limited to, the above preferred embodiments. Any variation, equivalent and modification within the principle of this invention shall be included within the scope of this invention as defined by the appended claims.

## Claims

1. A billing method, comprising:
receiving (101) an online billing message and carrying out preprocessing (102-103) for the message , wherein the online billing message includes user identification information and billing information; and
executing (104-106) an online bill cycle cut off operation after determining that the bill cycle cut off operation is required to be triggered for an account related to the user identification information, obtaining a result of the bill cycle cut off, and carrying out a rating and billing operation according to the billing information so as to complete billing.

2. The method according to claim 1, further comprising:
detecting bill cycle information periodically, polling each account, and if an account that meets a bill cycle cut off criterion exists, executing the bill cycle cut off operation and carrying out the rating and billing operation so as to complete billing,
wherein the bill cycle cut off criterion includes reaching or exceeding termination time of a bill cycle.

3. The method according to claim 1 or 2, wherein the online billing message comprises a session-based message and an event-based message; and the session-based message includes a billing initiation message, a billing update message and a billing termination message.

4. The method according to claim 3, further comprising carrying out a reserving and reverse-calculating operation after executing the bill cycle cut off operation if the online billing message comprises a session-based message.

5. The method according to claim 1 or 2, wherein a process for the determining that the bill cycle cut off operation is required to be triggered for the account related to the user identification information comprises:
searching (201-202) for account information related to the user identification information to obtain an account list; and
determining (203-206), for each account in the account list in sequence, whether a bill cycle cut off is required according to a preset rule if the number of accounts in the account list is not zero; and carrying out the bill cycle cut off if required,
wherein the preset rule comprises: occurrence time of the billing message is later than termination time of a current bill cycle of a current account.

6. The method according to claim 1 or 2, wherein a process for the executing the online bill cycle cut off operation comprises:
storing charge data of a current bill cycle into a storage position where charge data of a previous bill cycle is stored, clearing the charge data of the current bill cycle except a balance of the current bill cycle, and then changing start and termination time of the current bill cycle to those time having passed through the bill cycle cut off for the account.

7. The method according to claim 1 or 2, wherein if two storage spaces for storing charge data of a current bill cycle and charge data of a previous bill cycle respectively exist, and an identifier or a pointer of the current bill cycle and an identifier or a pointer of the previous bill cycle for identifying or pointing to the charge data of the two bill cycles respectively exist, a process for the executing the online bill cycle cut off operation comprises:
exchanging the identifiers or the pointers with each other, clearing the charge data of a bill cycle identified by the exchanged identifier of the current bill cycle or pointed to by the exchanged pointer of the current bill cycle except a balance of the bill cycle, and changing start and termination time of the current bill cycle to those time having passed through the bill cycle cut off for the account.

8. The method according to claim 1, wherein:
the online billing message is sent by a network element;
the network element comprises a Service Control Point, a Gateway GPRS Support Node, and a Mobile Switch Center; and
a protocol for bearing the online billing message comprises: Diameter, Radius, or a specific file or stream transfer protocol; the specific file or stream transfer protocol includes File Transfer Protocol, File Transfer Access and Management protocol, IP Detail Record/Stream Processor protocol.

9. A billing system, comprising:
a billing information collecting and preprocessing module, adapted to receive an online billing message and carry out preprocessing for the message, wherein the online billing message includes user identification information and billing information;
a main control module, adapted to transmit a preprocessed online billing message, receive feedback information, and invoke a rating and billing module to carry out billing upon determining that the feedback information includes a result of a bill cycle cut off, receive a result of a rating and billing operation, and return a response for the billing message to an initiator of the online billing message via the billing information collecting and preprocessing module;
a bill cycle cut off module, adapted to execute an online bill cycle cut off operation after determining that the bill cycle cut off operation is required to be triggered for an account related to the user identification information, and return the result of the bill cycle cut off to the main control module; and
a rating and billing module, adapted to carry out the rating and billing operation according to the billing information.

10. The system according to claim 9, wherein the online billing message comprises a session-based message and an event-based message; and
if the online billing message comprises a session-based message, the system may further comprises: a reserving and reverse-calculating module, adapted to accept invocation of the main control module, carry out a reserving and reverse-calculating operation according to the billing information, and return a result of the reserving and reverse-calculating operation to the main control module.

11. The system according to claim 9, wherein the bill cycle cut off module is further adapted to directly return to the main control module information for indicating that no bill cycle cut off is required after determining that no bill cycle cut off operation is required to be triggered for the account related to the user identification information.

12. The system according to claim 9, wherein:
the main control module is further adapted to periodically send information for detecting a bill cycle;
the bill cycle cut off module is further adapted to poll each account, and execute the bill cycle cut off operation if an account that meets a bill cycle cut off criterion exists; and
the bill cycle cut off criterion includes reaching or exceeding termination time of a bill cycle.

13. A bill cycle cut off module, comprising:
a cut off determining unit (510), adapted to receive from a main control module an online billing message including user identification information, and determine whether a bill cycle cut off operation is required to be triggered for an account related to the user identification information;
a bill cycle cut off unit (520), adapted to execute an online bill cycle cut off operation according to a notification from the cut off determining unit and obtain a result of the bill cycle cut off; and
a result return unit (530), adapted to transmit to the main control module the result of the bill cycle cut off received from the bill cycle cut off unit.

14. The bill cycle cut off module according to claim 13, wherein:
the cut off determining unit (510) is further adapted to notify the result return unit after determining that no bill cycle cut off operation is required to be triggered for the account related to the user identification information; and
the result return unit (530) is further adapted to transmit to the main control module information for indicating that no bill cycle cut off is required.

15. The bill cycle cut off module according to claim 13, wherein:
the cut off determining unit (510) is further adapted to receive information for periodically detecting a bill cycle, poll each account, and notify the bill cycle cut off unit to execute the bill cycle cut off operation if an account that meets a bill cycle cut off criterion exists; and
the bill cycle cut off criterion includes reaching or exceeding termination time of a bill cycle.

## Patentansprüche

1. Abrechnungsverfahren mit den folgenden Schritten:
Empfangen (101) einer Online-Abrechnungsnachricht und Ausführen von Vorverarbeitung (102-103) für die Nachricht, wobei die Online-Abrechnungsnachricht Benutzeridentifikationsinformationen und Abrechnungsinformationen umfasst; und
Ausführen (104-106) einer Online-Rechnungszyklus-Abgrenzungsoperation nach dem Bestimmen, dass die Rechnungszyklus-Abgrenzungsoperation für ein mit den Benutzeridentifikationsinformationen in Beziehung stehendes Konto getriggert werden muss, Erhalten eines Ergebnisses der Rechnungszyklus-Abgrenzung und Ausführen einer Tarifeinstufungs- und Abrechnungsoperation gemäß den Abrechnungsinformationen, um so die Abrechnung abzuschließen.

2. Verfahren nach Anspruch 1, ferner mit den folgenden Schritten:
periodisches Detektieren von Rechnungszyklusinformationen, Abfragen jedes Kontos, und wenn ein Konto, das ein Rechnungszyklus-Abgrenzungskriterium erfüllt, existiert, Ausführen der Rechnungszyklus-Abgrenzungsoperation und
Ausführen der Tarifeinstufungs- und Abrechnungsoperation, um so die Abrechnung abzuschließen,
wobei das Rechnungszyklus-Abgrenzungskriterium das Erreichen oder Überschreiten der Beendigungszeit eines Rechnungszyklus umfasst.

3. Verfahren nach Anspruch 1 oder 2, wobei die Online-Abrechnungsnachricht eine Nachricht auf Sitzungsbasis und eine Nachricht auf Ereignisbasis umfasst; und die Nachricht auf Sitzungsbasis eine Abrechnungseinleitungsnachricht, eine Abrechnungsaktualisierungsnachricht und eine Abrechnungsbeendigungsnachricht umfasst.

4. Verfahren nach Anspruch 3, ferner mit dem Schritt des Ausführens einer Reservier- und Umkehrberechnungsoperation nach dem Ausführen der Rechnungszyklus-Abgrenzungsoperation, wenn die Online-Abrechnungsnachricht eine Nachricht auf Sitzungsbasis umfasst.

5. Verfahren nach Anspruch 1 oder 2, wobei ein Prozess zum Bestimmen, dass die Rechnungszyklus-Abgrenzungsoperation für das mit den Benutzeridentifikationsinformationen in Beziehung stehende Konto getriggert werden muss, Folgendes umfasst:
Suchen (201-202) nach mit den Benutzeridentifikationsinformationen in Beziehung stehenden Kontoinformationen, um eine Kontenliste zu erhalten; und
Bestimmen (203-206) für jedes Konto in der Kontenliste der Reihe nach, ob eine Rechnungszyklus-Abgrenzung erforderlich ist, gemäß einer voreingestellten Regel, wenn die Anzahl Konten in der Kontenliste nicht null ist; und Ausführen der Rechnungszyklus-Abgrenzung, wenn es erforderlich ist,
wobei die voreingestellte Regel Folgendes umfasst: die Zeit des Auftretens der Abrechnungsnachricht ist später als die Beendigungszeit eines aktuellen Rechnungszyklus eines aktuellen Kontos.

6. Verfahren nach Anspruch 1 oder 2, wobei ein Prozess zum Ausführen der Online-Rechnungszyklus-Abgrenzungsoperation Folgendes umfasst:
Speichern von Gebührendaten eines aktuellen Rechnungszyklus in einer Speicherposition, an der Gebührendaten eines vorherigen Rechnungszyklus gespeichert werden, Löschen der Gebührendaten des aktuellen Rechnungszyklus mit Ausnahme eines Stands des aktuellen Rechnungszyklus und dann Umändern von Start- und Beendigungszeit des aktuellen Rechnungszyklus auf die Zeit, die durch die Rechnungszyklus-Abgrenzung für das Konto vergangen ist.

7. Verfahren nach Anspruch 1 oder 2, wobei, wenn zwei Speicherplätze zum Speichern von Gebührendaten eines aktuellen Rechnungszyklus und Gebührendaten eines vorherigen Rechnungszyklus jeweils existieren und eine Kennung oder ein Zeiger des aktuellen Rechnungszyklus und eine Kennung oder ein Zeiger des vorherigen Rechnungszyklus zum Identifizieren der oder Zeigen auf die Gebührendaten der beiden Rechnungszyklen jeweils existieren, ein Prozess zum Ausführen der Online-Rechnungszyklus-Abgrenzungsoperation Folgendes umfasst:
Austauschen der Kennungen oder der Zeiger miteinander, Löschen der Gebührendaten eines Rechnungszyklus, der durch die ausgetauschte Kennung des aktuellen Rechnungszyklus identifiziert wird oder auf den der ausgetauschte Zeiger des aktuellen Rechnungszyklus zeigt, mit Ausnahme eines Stands des Rechnungszyklus und Umändern von Start- und Beendigungszeit des aktuellen Rechnungszyklus auf die Zeit, die durch die Rechnungszyklus-Abgrenzung für das Konto vergangen ist.

8. Verfahren nach Anspruch 1, wobei
die Online-Abrechnungsnachricht durch ein Netzwerkelement gesendet wird;
das Netzwerkelement einen Service Control Point, einen Gateway GPRS Support Node und ein Mobile Switch Center umfasst; und
ein Protokoll zum Führen der Online-Abrechnungsnachricht Folgendes umfasst:
Diameter, Radius oder ein spezifisches Datei- oder Stream-Transferprotokoll; wobei das spezifische Datei- oder Stream-Transferprotokoll Folgendes umfasst: File Transfer Protocol, File Transfer Access and Management Protocol, IP Detail Record/Stream Processor Protocol.

9. Abrechnungssystem, umfassend:
ein Abrechnungsinformationssammel- und -vorverarbeitungsmodul, das dafür ausgelegt ist, eine Online-Abrechnungsnachricht zu empfangen und Vorverarbeitung für die Nachricht auszuführen, wobei die Online-Abrechnungsnachricht Benutzeridentifikationsinformationen und Abrechnungsinformationen umfasst;
ein Hauptsteuermodul, das dafür ausgelegt ist, eine vorverarbeitete Online-Abrechnungsnachricht zu senden, Rückmeldungsinformationen zu empfangen und
ein Tarifeinstufungs- und Abrechnungsmodul aufzurufen, um Abrechnung auszuführen, wenn bestimmt wird, dass die Rückmeldeinformationen ein Ergebnis einer Rechnungszyklus-Abgrenzung umfassen, ein Ergebnis einer Tarifeinstufungs- und
Abrechnungsoperation zu empfangen und eine Antwort für die Abrechnungsnachricht an einen Einleiter der Online-Abrechnungsnachricht über das Abrechnungsinformationssammel- und -vorverarbeitungsmodul zurückzugeben;
ein Rechnungszyklus-Abgrenzungsmodul, das dafür ausgelegt ist, eine Online-Rechnungszyklus-Abgrenzungsoperation auszuführen, nachdem bestimmt wird, dass die Rechnungszyklus-Abgrenzungsoperation für ein mit den Benutzeridentifikationsinformationen in Beziehung stehendes Konto getriggert werden muss, und das Ergebnis der Rechnungszyklus-Abgrenzung an das Hauptsteuermodul zurückzugeben; und
ein Tarifeinstufungs- und Abrechnungsmodul, das dafür ausgelegt ist, die Tarifeinstufungs- und Abrechnungsoperation gemäß den Abrechnungsinformationen auszuführen.

10. System nach Anspruch 9, wobei die Online-Abrechnungsnachricht eine Nachricht auf Sitzungsbasis und eine Nachricht auf Ereignisbasis umfasst; und
wenn die Online-Abrechnungsnachricht eine Nachricht auf Sitzungsbasis umfasst, das System ferner Folgendes umfasst: ein Reservier- und Umkehrberechnungsmodul, das dafür ausgelegt ist, den Aufruf des Hauptsteuermoduls anzunehmen, eine Reservier- und Umkehrberechnungsoperation gemäß den Abrechnungsinformationen auszuführen und ein Ergebnis der Reservier- und Umkehrberechnungsoperation an das Hauptsteuermodul zurückzugeben.

11. System nach Anspruch 9, wobei das Rechnungszyklus-Abgrenzungsmodul ferner dafür ausgelegt ist, direkt an das Hauptsteuermodul Informationen zurückzugeben, um anzuzeigen, dass keine Rechnungszyklus-Abgrenzung erforderlich ist, nachdem bestimmt wird, dass keine Rechnungszyklus-Abgrenzungsoperation für das mit den Benutzeridentifikationsinformationen in Beziehung stehende Konto getriggert werden muss.

12. System nach Anspruch 9, wobei
das Hauptsteuermodul ferner dafür ausgelegt ist, periodisch Informationen zum Detektieren eines Rechnungszyklus zu senden;
das Rechnungszyklus-Abgrenzungsmodul ferner dafür ausgelegt ist, jedes Konto abzufragen und die Rechnungszyklus-Abgrenzungsoperation auszuführen, wenn ein Konto, das ein Rechnungszyklus-Abgrenzungskriterium erfüllt, existiert; und
das Rechnungszyklus-Abgrenzungskriterium das Erreichen oder Überschreiten der Beendigungszeit eines Rechnungszyklus umfasst.

13. Rechnungszyklus-Abgrenzungsmodul, umfassend:
eine Abgrenzungsbestimmungseinheit (510), die dafür ausgelegt ist, von einem Hauptsteuermodul eine Online-Abrechnungsnachricht zu empfangen, die Benutzeridentifikationsinformationen umfasst, und zu bestimmen, ob eine Rechnungszyklus-Abgrenzungsoperation für ein mit den Benutzeridentifikationsinformationen in Beziehung stehendes Konto getriggert werden muss;
eine Rechnungszyklus-Abgrenzungseinheit (520), die dafür ausgelegt ist, gemäß einer Benachrichtigung von der Abgrenzungsbestimmungseinheit eine Online-Rechnungszyklus-Abgrenzungsoperation auszuführen und ein Ergebnis der Rechnungszyklus-Abgrenzung zu erhalten; und
eine Ergebnisrückgabeeinheit (530), die dafür ausgelegt ist, das Ergebnis der von der Rechnungszyklus-Abgrenzungseinheit empfangenen Rechnungszyklus-Abgrenzung zu dem Hauptsteuermodul zu senden.

14. Rechnungszyklus-Abgrenzungsmodul nach Anspruch 13, wobei
die Abgrenzungsbestimmungseinheit (510) ferner dafür ausgelegt ist, die Ergebnisrückgabeeinheit zu benachrichtigen, nachdem bestimmt wurde, dass keine Rechnungszyklus-Abgrenzungsoperation für das mit den Benutzeridentifikationsinformationen in Beziehung stehende Konto getriggert werden muss; und
die Ergebnisrückgabeeinheit (530) ferner dafür ausgelegt ist, Informationen zum Anzeigen, dass keine Rechnungszyklus-Abgrenzung erforderlich ist, zu dem Hauptsteuermodul zu senden.

15. Rechnungszyklus-Abgrenzungsmodul nach Anspruch 13, wobei
die Abgrenzungsbestimmungseinheit (510) ferner dafür ausgelegt ist, Informationen zum periodischen Detektieren eines Rechnungszyklus zu empfangen, jedes Konto abzufragen und die Rechnungszyklus-Abgrenzungseinheit zu benachrichtigen, die Rechnungszyklus-Abgrenzungsoperation auszuführen, wenn ein Konto, das ein Rechnungszyklus-Abgrenzungskriterium erfüllt, existiert; und
das Rechnungszyklus-Abgrenzungskriterium das Erreichen oder Überschreiten der Beendigungszeit eines Rechnungszyklus umfasst.

## Revendications

1. Procédé de facturation, comprenant :
la réception (101) d'un message de facturation en ligne et l'exécution d'un prétraitement (102-103) du message, le message de facturation en ligne comportant des informations d'identification d'utilisateur et des informations de facturation ; et
l'exécution (104-106) d'une opération d'arrêt de cycle de facturation en ligne après avoir déterminé que l'opération d'arrêt de cycle de facturation doit être déclenchée pour un compte associé aux informations d'identification d'utilisateur, l'obtention d'un résultat de l'arrêt du cycle de facturation, et l'exécution d'une opération de tarification et de facturation en fonction des informations de facturation afin de conclure la facturation.

2. Procédé selon la revendication 1, comprenant en outre :
la détection périodique d'informations de cycle de facturation, l'interrogation de chaque compte, et si un compte satisfaisant un critère d'arrêt de cycle de facturation existe, l'exécution de l'opération d'arrêt de cycle de facturation et l'exécution de l'opération de tarification et de facturation de façon à conclure la facturation,
dans lequel le critère d'arrêt de cycle de facturation comporte l'atteinte ou le dépassement d'un instant de clôture d'un cycle de facturation.

3. Procédé selon la revendication 1 ou 2, dans lequel le message de facturation en ligne comprend un message de session et un message d'événement, le message de session comportant un message de lancement de facturation, un message d'actualisation de facturation et un message de clôture de facturation.

4. Procédé selon la revendication 3, comprenant en outre l'exécution d'une opération de réserve et de calcul inverse après l'exécution de l'opération d'arrêt de cycle de facturation si le message de facturation en ligne comprend un message de session.

5. Procédé selon la revendication 1 ou 2, dans lequel un processus pour déterminer que l'opération d'arrêt de cycle de facturation doit être déclenchée pour le compte associé aux informations d'identification d'utilisateur comprend :
la recherche (201-202) d'informations de compte associées aux informations d'identification d'utilisateur afin d'obtenir une liste de comptes ; et
le fait de déterminer (203-206), pour chaque compte les uns après les autres dans la liste de comptes, si un arrêt de cycle de facturation est nécessaire ou non en fonction d'une règle préétablie si le nombre de comptes dans la liste de comptes n'est pas nul ;
et l'exécution de l'arrêt de cycle de facturation si cela est nécessaire,
dans lequel la règle préétablie comprend : l'instant d'occurrence du message de facturation est ultérieur à l'instant de clôture d'un cycle de facturation courant d'un compte courant.

6. Procédé selon la revendication 1 ou 2, dans lequel un processus pour l'exécution de l'opération d'arrêt de cycle de facturation en ligne comprend :
le stockage de données de facturation d'un cycle de facturation courant dans un emplacement de stockage où des données de facturation d'un cycle de facturation précédent sont stockées, l'effacement des données de facturation du cycle de facturation courant à l'exception d'un solde du cycle de facturation courant, puis le remplacement des instants de lancement et de clôture du cycle de facturation courant par ceux étant passés par l'arrêt de cycle de facturation du compte.

7. Procédé selon la revendication 1 ou 2, dans lequel s'il existe respectivement deux espaces de stockage pour stocker les données de facturation d'un cycle de facturation courant et les données de facturation d'un cycle de facturation précédent, et s'il existe respectivement un identifiant ou un pointeur du cycle de facturation courant et un identifiant ou un pointeur du cycle de facturation précédent pour identifier ou pointer sur les données de facturation des deux cycles de facturation, un processus d'exécution de l'opération d'arrêt de cycle de facturation en ligne comprend :
l'échange des identifiants ou pointeurs les uns contre les autres, l'effacement des données de facturation d'un cycle de facturation identifiées par l'identifiant échangé du cycle de facturation courant ou sur lesquelles pointe le pointeur échangé du cycle de facturation courant à l'exception d'un solde du cycle de facturation, et le remplacement des instants de lancement et de clôture du cycle de facturation courant par ceux étant passés par l'arrêt de cycle de facturation du compte.

8. Procédé selon la revendication 1, dans lequel :
le message de facturation en ligne est envoyé par un élément de réseau ;
l'élément de réseau comprend un Point de Commande de Service, un Noeud de Support GPRS de Passerelle et un Centre de Commutation de Services Mobiles ; et
un protocole pour l'acheminement du message de facturation en ligne comprend : Diameter, Radius, ou un protocole de transfert de fichier ou de filière spécifique ; le protocole de transfert de fichier ou de filière spécifique comprenant le Protocole de Transfert de Fichiers, le protocole d'Accès et de Gestion de Transfert de Fichiers, le protocole de Processeur d'Enregistrements/Filières Détaillés IP.

9. Système de facturation, comprenant :
un module de collecte et de prétraitement d'informations de facturation, adapté pour recevoir un message de facturation en ligne et exécuter un prétraitement du message, le message de facturation en ligne comportant des informations d'identification d'utilisateur et des informations de facturation ;
un module de commande principal, adapté pour transmettre un message de facturation en ligne prétraité, recevoir des informations de retour et solliciter un module de tarification et de facturation pour effectuer la facturation lorsqu'il est déterminé que les informations de retour comportent un résultat d'un arrêt de cycle de facturation, recevoir un résultat d'une opération de tarification et de facturation, et renvoyer une réponse au message de facturation à un expéditeur du message de facturation en ligne par l'intermédiaire du module de collecte et de prétraitement d'informations de facturation ;
un module d'arrêt de cycle de facturation, adapté pour exécuter une opération d'arrêt de cycle de facturation en ligne après avoir déterminé que l'opération d'arrêt de cycle de facturation doit être déclenchée pour un compte associé aux informations d'identification d'utilisateur, et renvoyer le résultat de l'arrêt du cycle de facturation au module de commande principal ; et
un module de tarification et de facturation, adapté pour exécuter l'opération de tarification et de facturation en fonction des informations de facturation.

10. Système selon la revendication 9, dans lequel le message de facturation en ligne comprend un message de session et un message d'événement ; et
si le message de facturation en ligne comprend un message de session, le système peut comprendre en outre : un module de réserve et de calcul inverse, adapté pour accepter une sollicitation du module de commande principal, exécuter une opération de réserve et de calcul inverse en fonction des informations de facturation, et renvoyer un résultat de l'opération de réserve et de calcul inverse au module de commande principal.

11. Système selon la revendication 9, dans lequel le module d'arrêt de cycle de facturation est adapté en outre pour renvoyer directement au module de commande principal des informations indiquant qu'aucun arrêt de cycle de facturation n'est nécessaire après avoir déterminé qu'aucune opération d'arrêt de cycle de facturation ne doit être déclenchée pour le compte associé aux informations d'identification d'utilisateur.

12. Système selon la revendication 9, dans lequel :
le module de commande principal est adapté en outre pour envoyer périodiquement des informations de détection d'un cycle de facturation ;
le module d'arrêt de cycle de facturation est adapté en outre pour interroger chaque compte, et exécuter l'opération d'arrêt de cycle de facturation si un compte satisfaisant un critère d'arrêt de cycle de facturation existe ; et
le critère d'arrêt de cycle de facturation comporte l'atteinte ou le dépassement d'un instant de clôture d'un cycle de facturation.

13. Module d'arrêt de cycle de facturation, comprenant :
une unité de détermination d'arrêt (510), adaptée pour recevoir d'un module de commande principal un message de facturation en ligne comportant des informations d'identification d'utilisateur et déterminer si une opération d'arrêt de cycle de facturation doit être déclenchée ou non pour un compte associé aux informations d'identification d'utilisateur ;
une unité d'arrêt de cycle de facturation (520), adaptée pour exécuter une opération d'arrêt de cycle de facturation en ligne en fonction d'une notification par l'unité de détermination d'arrêt et obtenir un résultat de l'arrêt du cycle de facturation ; et
une unité de renvoi de résultat (530), adaptée pour transmettre au module de commande principal le résultat de l'arrêt de cycle de facturation reçu de l'unité d'arrêt de cycle de facturation.

14. Module d'arrêt de cycle de facturation selon la revendication 13, dans lequel :
l'unité de détermination d'arrêt (510) est adaptée en outre pour notifier l'unité de renvoi de résultat après avoir déterminé qu'aucune opération d'arrêt de cycle de facturation ne doit être déclenchée pour le compte associé aux informations d'identification d'utilisateur ; et
l'unité de renvoi de résultat (530) est adaptée en outre pour transmettre au module de commande principal des informations indiquant qu'aucun arrêt de cycle de facturation n'est nécessaire.

15. Module d'arrêt de cycle de facturation selon la revendication 13, dans lequel :
l'unité de détermination d'arrêt (510) est adaptée en outre pour recevoir des informations de détection périodique d'un cycle de facturation, interroger chaque compte, et indiquer à l'unité d'arrêt de cycle de facturation d'exécuter l'opération d'arrêt de cycle de facturation si un compte satisfaisant un critère d'arrêt de cycle de facturation existe ; et
le critère d'arrêt de cycle de facturation comporte l'atteinte ou le dépassement d'un instant de clôture d'un cycle de facturation.
